# NEUE EUROPÄISCHE PATENTSCHRIFT

(11) **EP 0 877 039 B2**
(45) Veröffentlichungstag und Bekanntmachung des Hinweises auf die Entscheidung über den Einspruch: **09.02.2005**
(45) Hinweis auf die Patenterteilung: 04.10.2001
(21) Anmeldenummer: 98108050.0
(22) Anmeldetag: 04.05.1998
(51) Int. Cl.: C08F 297/08, C08F 10/06, C08L 23/12, C08K 5/098

(54) **Verfahren zur Herstellung einer Polypropylenformmasse mit ausgezeichneter Steifigkeits-Zähigkeitsrelation**
Process for the preparation of a polypropylene molding composition with excellent stiffness and toughness
Procédé pour la fabrication d'une composition de polypropylène a moulage ayant haute tenacité et rigidité

(30) Priorität: 05.05.1997 DE 19718900
(43) Veröffentlichungstag der Anmeldung: 11.11.1998
(73) Patentinhaber: Basell Polyolefine GmbH, 50389 Wesseling (DE)
(72) Erfinder: Dolle, Volker, Dr., 64625 Bensheim (DE); Enderle, Hans-Frieder, Dr., 60318 Frankfurt (DE)

(56) Entgegenhaltungen:
- EP-A- 0 457 455
- EP-A- 0 534 776
- EP-A- 0 588 581
- EP-A- 0 611 271
- EP-A- 0 700 943
- DE-A- 4 426 569
- "Polypropylene Handbook", Ed. Edward P. Moore, Jr., Hanser Publishers, 1996, 5. 293-301
- Menges G.; Schmidt L.; Beyer C.; Cordes H.: 'Beeinflüssung des Eigenschaftbildes von Thermoplasten durch Änderung der Prozessparameter und Einsatz von Zusatzstoffen', GAK 7/1980, S. 468-476

## Beschreibung

Die vorliegende Erfindung betrifft ein Verfahren zur Herstellung eines Propylen/Ethylen-Reaktorblends aus Propylen- und Ethylenbausteinen dessen Polymerbestandteile aus einem Propylen-Homopolymer und einem ethylenarmen Ethylen/Propylen-Copolymer bestehen, einen Schmelzflußindex MFR (230/5) von mindestens 5 dg/min hat und mit Nukleierungsmitteln nukleiert ist.

EP 519725 beschreibt ein hochkristallines Polyolefin-Material, das zur Herstellung von Autostoßfängern geeignet ist. Dieses Material wird durch Blenden in einem Extruder hergestellt und besteht aus folgenden vier Komponenten: einem Ethylen/Propylen-Kautschuk, einem Ethylen/Propylen-Blockcopolymer, einem Ethylen/Buten-Copolymer und 3 bis 10 Gew.-% Talkum. Die Herstellung dieser aufwendigen Mischung in einem Extruder ist sehr arbeitsintensiv und führt zu Inhomogenitäten. Die mechanischen Daten dieser Mischung entsprechen nicht den heutigen technischen Anforderungen und die Dichte des Materials ist durch die Talkumverstärkung größer als 0,95 kg/l und damit oberhalb der Zielgröße für das gewünschte Produkt.

EP 496625 beschreibt ebenfalls ein hochkristallines Polyolefin-Material, das zur Herstellung von Autostoßfängern geeignet ist. In diesem Patent werden zur Erzielung noch höherer Moduli bis zu 30 Gew.-% Talkum zugesetzt. Auch diese Materialien sind durch eine hohe Dichte von >1,05 kg/l gekennzeichnet.

Gegenstand der EP-A 534 776 ist die Herstellung eines Blockcopolymerisats aus einem Propylenhomopolymerisat und einem Propylen-Ethylen-Copolymerisat nach einem zweistufigen Verfahren. Dabei wird in beiden Polymerisationsstufen in einer Suspension polymerisiert. Das Blockcopolymerisat enthält Benzoesäure als Nukleierungsmittel.

Aufgrund steigender technischer Anforderungen besteht die Aufgabe, eine verbesserte Formmasse zu finden, mit der sich auf herkömmlichen Fertigungswerkzeugen Spritzgußartikel herstellen lassen, die neben einer niedrigen Brüchigkeit eine hohe Zähigkeit und eine hervorragende Steifigkeit in Verbindung mit einer Fertigteildichte von 0,95 kg/l oder weniger besitzen.

Demgemäß wurde ein Verfahren zur Herstellung eines Propylen/Ethylen-Reaktorblends aus Propylen- und Ethylenbausteinen gefunden, dessen Polymerbestandteile aus einem Propylen-Homopolymer und einem ethylenarmen Ethylen/Propylen-Copolymer bestehen, einen Schmelzflußindex MFR (230/5) von mindestens 5 dg/min hat und mit Nukleierungsmitteln nukleiert ist, wobei der Ethyleneinbau im Ethylen/Propylen-Copolymer 13 bis 40 Gew.-%, bezogen auf das Copolymer, und der Ethylengehalt im Reaktorblend 0,7 bis 10 Gew.-%, bezogen auf die Gesamtpolymermasse, ist, bei dem in einer ersten Reaktionsstufe Propylen in Suspension bei einer Temperatur von 30 bis 150°C, einem Druck von 10 bis 100 bar und einer Verweilzeit von 30 min bis 6 h in Gegenwart eines Katalysators, einer aluminiumorganischen Verbindung und einer Organosiliciumverbindung polymerisiert wird und in einer zweiten Reaktionsstufe Propylen mit Ethylen und ggf. einem weiteren 1-Olefin mit 4 bis 20 Kohlenstoffatomen in der Gasphase bei einer Temperatur von 30 bis 150°C, einem Druck von 1 bis 50 bar und einer Verweilzeit von 30 min bis 6 h in Gegenwart eines Katalysators, einer aluminiumorganischen Verbindung und einer Organosiliciumverbindung copolymerisiert wird, welches dadurch gekennzeichnet ist, daß in der ersten Reaktionsstufe das Propylen sowohl Monomer als auch Suspensionsmittel ist, daß das in der ersten Reaktionsstufe hergestellte PP-Homopolymer eine Viskosität von 70 bis 300 ml/g und einen Anteil am Gesamtpolymeren von 75 bis 98 Gew.-% hat, daß nach der zweiten Reaktionsstufe das Gesamtpolymer eine Viskosität von 100 bis 400 ml/g und einen Ethylengehalt von 0,7 bis 10 Gew.-% aufweist und daß in der zweiten Reaktionsstufe ein Copolymer-Produkt mit einem Copolymeranteil von 2 bis 25 Gew.-% am Gesamtpolymer und einem Ethyleneinbau in der zweiten Reaktionsstufe von 13 bis 40 Gew.-% hergestellt wird.

Der Ethyleneinbau in der zweiten Reaktionsstufe beträgt besonders bevorzugt von 14 bis 35 Gew.-%.

Die beschriebene Polymerisation wird in einem Masse-Gasphasen-Hybrid-Verfahren mit mindestens zwei Reaktionsstufen durchgeführt, wobei in der ersten Stufe das Monomere, das Propylen, Edukt und Suspensionsmittel zugleich ist und in der zweiten Stufe, der Gasphasenstufe, Ethylen, Propylen und ggf. weitere Olefine oder Aliphaten zudosiert werden.

Das erfindungsgemäße Verfahren wird insbesondere als mindestens zweistufige Polymerisation mit vorgeschalteter Vorpolymerisation ausgeführt. Sowohl die erste und die zweite Reaktionsstufe als auch die Vorpolymerisation können entweder in diskontinuierlicher oder auch kontinuierlicher Betriebsweise durchgeführt werden. Bevorzugt wird die kontinuierliche Betriebsweise. Die Komponente B und die Komponente C werden vor der Vorpolymerisation miteinander vermischt und dann mit dem Katalysator (A) in Kontakt gebracht. In Gegenwart dieser aktiven Komponenten wird Propylen in Suspension oder im Masseverfahren vorpolymerisiert. Bevorzugt ist die Vorpolymerisation im flüssigen Monomeren. Die Verweilzeit beträgt 4 bis 10 min, die Temperatur der Vorpolymerisation liegt im Bereich von 10 bis 25 °C.

Das Vorpolymerisat wird in die erste Reaktionsstufe der Polymerisation überführt und in flüssigem Propylen bei einer Temperatur von 55 bis 100 °C und einer Verweilzeit von 0,5 bis 6 h polymerisiert. Es wird ein Phasenverhältnis im Bereich von 2,5 bis 6 l flüssiges Propylen pro kg PP eingestellt. Zur Molmassenregelung wird Wasserstoff eindosiert. Die erste Reaktionsstufe kann auch in zwei hintereinandergeschalteten Reaktoren ausgeführt werden. In beiden Reaktoren werden jedoch die gleichen Reaktionsbedingungen gewählt. Die Anzahl der Reaktoren (eins oder zwei) wird je nach Anlagenkapazität gewählt.

Nach der ersten Reaktionsstufe wird das mehrphasige System in einen Aufarbeitungsreaktor (Flashgefäß) überführt. Dabei wird das System auf einen Druck von 14 bis 18 bar entspannt und das flüssige Propylen durch Zufuhr von Wärme verdampft. Die Temperatur stellt sich auf 60 - 90 °C ein. Das Reaktionsgemisch aus PP, dem gasförmigen Monomeren und Wasserstoff wird in einen Gasphasenreaktor überführt. Das verdampfte Propylen und ein Teil des Wasserstoffs werden abgetrennt. Das verdampfte Monomergemisch wird kondensiert und destillativ in Propylen und Wasserstoff aufgetrennt. Das so gereinigte Monomer wird wieder in den ersten Reaktor eindosiert.

Die zweite Reaktionsstufe findet im genannten Gasphasenreaktor statt. Dort wird ein Druck von 10 bis 14 bar, eine Temperatur von 30 bis 110 °C und eine Verweilzeit von 30 min bis 6 h eingestellt. Zur Molmassenregelung kann auch in der zweiten Stufe H₂ zudosiert werden. Die zweite Reaktionsstufe kann auch in zwei hintereinandergeschalteten Reaktoren ausgeführt werden. In beiden Reaktoren werden jedoch die gleichen Reaktionsbedingungen gewählt. Die Anzahl der Reaktoren (eins oder zwei) wird je nach Anlagenkapazität gewählt.

Geeignete Reaktoren für die erste Reaktionsstufe sind Rührkesselreaktoren oder Schlaufenreaktoren, für die zweite Reaktionstufe Gasphasenwirbelbettreaktoren oder Gasphasenreaktoren, die die Produkt/Edukt-Durchmischung durch Rührung sicherstellen.

Als Komponente B wird eine Trialkylaluminiumverbindung, insbesondere Trimethylaluminium, Triisobutylaluminium oder Triethylaluminium verwendet. Bevorzugt ist die Verwendung von Triethylaluminium oder Triisobutylaluminium. Besonders bevorzugt ist die Verwendung von Triethylaluminium.

Als Komponente C wird Cyclohexylmethyldimethoxysilan, Biscyclopentyldimethoxysilan oder Diphenyldimethoxysilan eingesetzt. Besonders bevorzugt ist die Verwendung von Cyclohexylmethyldimethoxysilan oder Biscyclopentyldimethoxysilan.

Die Komponente B wird in einer Konzentration von 0,001 bis 10 mmol/l, vorzugsweise 0,1 bis 5 mmol/l Propylen eingesetzt. Die Komponente C wird in einem Verhältnis R zur Komponente B eingesetzt. Das Verhältnis R berechnet sich als Quotient der Konzentration B zu der Konzentration C jeweils in mmol/l. Das Verhältnis R beträgt 1 bis 100, bevorzugt 1,5 bis 100, besonders bevorzugt 2 bis 50.

Das Reaktorblend gemäß der Erfindung hat im allgemeinen einen MFR (230/5) von 5 bis 400 dg/min, bevorzugt von 10 bis 250 dg/min und besonders bevorzugt von 30 bis 200 dg/min. Es besteht zu 0,7 bis 10 Gew.-% aus Ethylenbausteinen und zu maximal 99,3 Gew.-% aus Propylenbausteinen.

Nach der zweiten Reaktionsstufe wird das Gemisch aus Propylen, Wasserstoff und Ethylen, das auch andere Olefine oder Aliphaten enthalten kann, aufgearbeitet. Bevorzugt ist das Abtrennen der Gase vom PP in einem Zyklon in Kombination mit einem Taschenfilter. Anschließend wird das gereinigte Copolymerisat monomerfrei gespült und im Inertgasstrom getrocknet. Das so erhaltene Copolymerisat wird wahlweise mit Nukleierungsmitteln, Neutralisierungsmitteln, Stabilisatoren, Gleitmitteln, Füllstoffen, Pigmenten etc. versetzt und beispielsweise unter Verwendung eines Extruders oder Kneters granuliert.

Zur Beeinflussung der Kristallinität, d. h. zur Verbesserung der mechanischen Werte des Fertigteils, wird ein Nukleierungsmittel zugesetzt. Ein geeignetes Nukleierungsmittel ist Natrium-Benzoat, das in Konzentrationen von 0,02 bis 0,5 Gew.-%, bevorzugt von 0,03 bis 0,4 Gew.-% zugegeben wird. Es sind aber auch andere Substanzen als Nukleierungsmittel geeignet. Außerdem sind Kombinationen von Nukleierungsmitteln für manche Anwendungen sinnvoll.

Das erfindungsgemäße Verfahren zur Herstellung des Reaktorblends eignet sich zur Herstellung von Kunststoff-Formteilen allgemein. Besonders vorteilhaft kann das erfindungsgemäße Reaktorblend zur Herstellung von Kfz-Stoßfängern, KFZ-Innenraumverkleidungen, Armaturenbrettern und Dünnwandspritzgußartikeln verwendet werden.

### Beispiele

Die folgenden Beispiele sollen die Erfindung erläutern. Zur Charakterisierung der hergestellten Produkte wurden folgende polymeranalytischen Methoden verwendet:
- Schmelzindex MFR (230/5) nach DIN 53735
- acn-Kerbschlagzähigkeit nach ISO 179 / 1eA
- Zug-E-Modul nach DIN EN ISO 527 Zugstab 1 A 50 mm/min

### Beispiel 1 (Referenzbeispiel)

Es wurde in einem Rührkessel von 70 I Inhalt diskontinuierlich polymerisiert. Der Reaktor war mit 50 I flüssigem Propylen beschickt. Als Cokatalysator (B) wurde Triethylaluminium in einer Konzentration von 2 mmol/l Propylen verwendet. Als Stereoregulator (C) wurde Cyclohexylmethyldimethoxysilan in einer Konzentration von 0,6 mmol/l Propylen verwendet. Die Komponenten B und C wurden miteinander vermischt und zu dem Katalysator (A), 354 mg Montell FT4S Katalysator, gegeben. Die Mischung aus A, B und C wurde dann in den Reaktor eindosiert. Anschließend wurden 129 N1 Wasserstoff eindosiert. Die Polymerisationstemperatur betrug 70 °C, die Homopolymerisationszeit betrug 100 Minuten. Nach der Homopolymerisationszeit wurden bei 70 °C 30 N1 Wasserstoff/PropylenGasgemisch aus der Reaktorgasphase herausgefahren. Der Reaktorinnendruck stellte sich dadurch auf 32 bar bei 70 °C ein. Anschließend wurde Ethylen bis zu einem Gesamtdruck von 39 bar zugegeben und dadurch die Copolymerisationsstufe gestartet. Der Ethylendruck wurde durch zudosieren von weiterem Ethylen konstant gehalten. Die Copolymerisationszeit betrug 30 Minuten. Nach der Copolymerisation wurde der Reaktor entspannt, wobei das flüssige Monomere verdampfte, und das Produkt als Pulver aus dem Reaktor entnommen. Es ergab sich eine Katalysatorausbeute von 22,3 kg PP/g Kat. Am Produkt wurde ein MFR(230/5) von 77 dg/min sowie, IR-spektroskopisch, ein Ethyleneinbau (C2-Einbau) von 7,4 Gew.-% gemessen. Der xylolkaltlösliche Anteil betrug 22,6 Gew.-%.

### Vergleichsbeispiel 1

Es wurde verfahren wie in Beispiel 1. In der Copolymerisationsstufe wurde statt 7 bar zusätzlichem Ethylendruck ein Druck von 14 bar Ethylen zusätzlich eingestellt und konstant gehalten. Das Abgasen von Wasserstoff und Propylen nach der Homopolymerisationsstufe wurde nicht durchgeführt. Durch die Ethylenzugabe stellte sich ein Druck von 40,5 bar ein.

### Beispiel 2 (Referenzbeispiel)

Das aus Beispiel 1 erhaltene Pulver wurde unter Inertgas in einem Zwelschneckenextruder mit 28 mm Schnekkendurchmesser bei ca. 220 - 240 °C granuliert. Dabei wurden als Stabilisatoren 0,15 Gew.-% ®Irganox 1010, 0,15 Gew.-% ®Hostanox PAR 24 und 0,05 Gew.-% Ca-Stearat hinzugefügt. Als Nukleierungsmittel wurden 0,05 Gew.-% Na-Benzoat zugegeben.

### Vergleichsbeispiel 2

Es wurde verfahren wie in Beispiel 2. Als Pulver wurde das Material aus dem Vergleichsbeispiel 1 eingesetzt.

### Beispiel 3

In einer kontinuierlich betriebenen Polymerisationsanlage wurde Propylen zu PP polymerisiert. Dazu wurden der Katalysator (FT4S von Montell), Triethylaluminium und Cyclohexylmethyldimethoxysilan miteinander vermischt und in einem Vorpolymerisationsreaktor kontinuierlich in flüssigem Propylen vorpolymerisiert. Das Gemisch aus Katalysator, Triethylaluminium, Cyclohexylmethyldimethoxysilan, Propylen und Polypropylen wurde in einen ersten Reaktor eindosiert. Zusätzlich wurde Propylen über ein Vorratsgefäß dem ersten Reaktor zugeführt. Im flüssigen Propylen wurde Wasserstoff gelöst und über diesen Strom ebenfalls in den Reaktor eindosiert. Die Konzentration des Wasserstoffs im flüssigen Propylen wurde auf 2000 ppm eingestellt. In den ersten Reaktor wurden 17 t/h Propylen eingefahren und in Anwesenheit des FT4S Katalysators zu PP umgesetzt. Dem ersten Reaktor wurde kontinuierlich das Reaktionsgemisch entnommen und in einen zweiten Reaktor eindosiert. In den zweiten Reaktor wurden außerdem 7 t/h Propylen nachdosiert. In diesem Propylen-Strom wurde ebenfalls eine Konzentration von 2000 ppm Wasserstoff eingestellt. Durch die Propyleneingasmenge stellte sich in den zwei Reaktoren eine Verweilzeit von 100 Minuten ein. Nach Durchlaufen des zweiten Reaktors wurde das Reaktionsgemisch in einem Flashgefäß durch Entspannen auf 18 bar aufgearbeitet und das PP von einem Großteil der anderen, gasförmigen Komponenten separiert.

Das PP wurde mit einem Anteil Propylen und Wasserstoff aus dem Flashgefäß in einen Gasphasenreaktor überführt. In diesen wurden Ethylen, Propylen und Wasserstoff eingeleitet, so daß sich eine Konzentration von 25 mol-% Ethylen und 75 mol-% Propylen in der Gasphase einstellte. Die Wasserstoffkonzentration betrug 1000 ppm. Die Verweilzeit wurde durch Variation des Füllstandes (bezogen auf das Polymer) des Gasphasenreaktors auf eine Zeit von 60 Minuten eingestellt. Anschließend verließ das Polypropylen zusammen mit Ethylen und Propylen den Gasphasenreaktor und wurde entspannt. Das Polymere wurde dann durch Spülen mit Stickstoff und/ oder Wasserdampf monomerfrei gemacht und anschließend in einen Vorratsbunker abgeführt. Das im Flashgefäß abgetrennte gasförmige Propylen wurde kondensiert, destilliert und anschließend in den Vorratstank zurückgefahren. Pro Liter flüssiges Propylen, das in den ersten Reaktor eindosiert wurde, wurden 0,9 mmol Al, 0,3 mmol Donor und 5 mmol Katalysator (gemessen als mmol Ti) eindosiert.

### Vergleichsbeispiel 3

Es wurde verfahren wie in Beispiel 3, jedoch wurde im Gasphasenreaktor eine Konzentration von 42 mol-% Ethylen, 58 mol-% Propylen und 2500 ppm Wasserstoff eingestellt. Die Verweilzeit betrug 55 Minuten.

### Beispiel 4

Das Produkt aus Beispiel 3 wurde analog Beispiel 2 granuliert.

### Vergleichsbeispiel 4

Das Produkt aus Vergleichsbeispiel 3 wurde analog Beispiel 2 granuliert.

### Beispiel 5

Aus dem Granulat aus Beispiel 4 wurden Preßplatten hergestellt und daran eine acn Messung nach ISO 179 sowie eine Zug-E-Modul-Messung (=ZEM) nach DIN EN ISO 527 durchgeführt (Meßwerte siehe Tabelle 1, Variante A).

### Beispiel 6

Es wurde verfahren wie in Beispiel 3, jedoch wurde die Verweilzeit im Gasphasenreaktor variiert. Die Verweitzeit in der Homopolymerisationsstufe wurde gleichgehalten. Daraus ergaben sich unterschiedliche Ethyleneinbauten im Polymeren. Das erhaltene Produkt wurde analog Beispiel 2 granuliert und entsprechend Beispiel 5 geprüft. Die Versuchsbedingungen und Meßergebnisse sind in Tabelle 1, Varianten B-D, dargestellt. Als Vergleich wurde das Produkt aus Vergleichsbeispiel 4 ebenfalls analog Beispiel 2 granuliert und entsprechend Beispiel 5 geprüft (Meßwarte siehe Tabelle 1, Variante E). Durch Variation der Wasserstoffkonzentration im Gasphasenreaktor wurde für alle Versuchsvarianten A bis E der MFR-Wert am Endprodukt annähernd gleich gehalten.

**Tabelle 1**

| Versuchsbedingungen und Ergebnisse zu den Beispielen 5 und 6 | | | | | |
|---|---|---|---|---|---|
| Variante | VerweilzeitGasphase [min] | Ethyleneinbau [Gew.-%] | MFR (230/5) [dg/min] | acn (23°C)[kJ/ m²] | ZEM[Mpa] |
| A | 60 | 7,4 % | 78 | 10,9 | 1140 |
| B | 39,6 | 4,7 % | 75,3 | 8,7 | 1426 |
| C | 33,6 | 3,2 % | 76,2 | 7,4 | 1520 |
| D | 45,6 | 5,6 % | 80,1 | 8,8 | 1293 |
| E | 55 | 9,2 % | 84,2 | 7,1 | 1350 |

Aus Tabelle 1 ist erkennbar, daß bei vergleichbarer Zähigkeit (acn Messung) das erfindungsgemäße Produkt (Variante C) einen um 170 Einheiten höheren Zug-E-Modul, d. h. eine deutlich höhere Steifigkeit als das Vergleichsbeispiel (Variante E) aufweist. Bei annähernd vergleichbarer Steifigkeit weist das erfindungsgemäße Produkt (Variante D) eine höhere Zähigkeit als das Vergleichsbeispiel (Variante E) auf. Aus den Varianten A bis D ist ferner zu erkennen, daß Härte (=Steifigkeit) und Zähigkeit des erfindungsgemäßen Reaktorblends über einen weiten Bereich variiert werden können.

### Beispiel 7 (Referenzbeispiel)

Es wurde verfahren wie in Beispiel 1, jedoch wurde Dicyclopentyldimethoxysilan als Stereoregulator verwendet. Das Molverhältnis R zwischen der Komponente B und der Komponente C betrug 3 : 1. Es stellte sich eine Katalysatorausbeute von 31 kg PP/g Kat ein. Der MFR(230/5) Wert betrug 78,3 dg/min. IR-spektroskopisch wurde ein C2-Einbau von 7,8 Gew.-% gefunden.

### Beispiel 8

Es wurde verfahren wie in Beispiel 4, jedoch wurde Diphenyldimethoxysilan als Stereoregulator verwendet. Das Molverhältnis R zwischen der Komponente B und der Komponente C betrug 3 : 1. Es stellte sich eine Katalysatorausbeute von 31 kgPP/g Kat ein. Der MFR(230/5) Wert betrug 83,2 dg/min. IR-spektroskopisch wurde ein C2-Einbau von 6,9 Gew.-% gefunden.

### Beispiel 9 (Referenzbeispiel)

Das Produkt aus Beispiel 1 wurde einer Fraktionierung unterzogen. Dazu wurde die gesamte Polymerprobe in einem Benzinschnitt (Produkt Exxsol 140/170 der Firma Exxon Chemicals, Köln, Deutschland) bei 120 °C unter Rühren gelöst.

Danach ließ man unter Rühren auf 50 °C abkühlen und erhielt ein kristallines Material (=Fraktion I), das heiß abfiltriert wurde. Das Filtrat wurde eingeengt und der erhaltene Rückstand in einer üblichen Soxhlett Apparatur mit Ether erschöpfend extrahiert. Man erhielt so einen Rückstand (=Fraktion II) und einen Anteil in Lösung. Das Lösemittel wurde verdampft und der dann erhaltene Rückstand (=Fraktion III) wurde weiter untersucht.

Die drei Fraktionen wurden IR-spektroskopisch auf ihren C2-Gehalt untersucht (siehe Tabelle 2). Von der Fraktion II wurde außerdem eine DSC angefertigt. Dabei wurde ein Glasübergang bei - 41 °C und ein sehr breiter Schmelzpeak, der bei 30 °C beginnt und bis 130 °C reicht sowie eine Schmelzwärme von 30 J/g aufweist, gefunden.

**Tabelle 2**

| Ergebnis der Fraktionierung | |
|---|---|
| Fraktion | C2 (IR) |
| I | 0,3 Gew. % |
| II | 26,6 Gew. % |
| III | 0,2 Gew. % |

### Beispiel 10 (Referenzbeispiel)

Das Produkt aus Vergleichsbeispiel 1 wurde einer Fraktionierung nach Beispiel 9 unterzogen. Die drei Fraktionen wurden IR-spektroskopisch auf ihren C2-Gehalt untersucht (siehe Tabelle 3). Auch hier wurde von Fraktion II eine DSC angefertigt. Dabei wurde gefunden, daß die Fraktion rein amorph ist und die Glasstufe bei - 45 °C liegt.

**Tabelle 3**

| Ergebnis der Fraktionierung | |
|---|---|
| Fraktion | C2 (IR) |
| I | 0.34 Gew.-% |
| II | 46.7 Gew.-% |
| III | 0.1 Gew.-% |

## Patentansprüche

1. Verfahren zur Herstellung eines Propylen/Ethylen-Reaktorblends aus Propylen- und Ethylenbausteinen, dessen Polymer bestandteile aus einem Propylen-Homopolymer und einem ethylenarmen Ethylen/Propylen-Copolymer bestehen einen Schmelzflußindex MFR (230/5) von mindestens 5 dg/min hat und mit Nukleierungsmitteln nukleiert ist, wobei der Ethyleneinbau im Ethylen/Propylen-Copolymer 13 bis 40 Gew.-%, bezogen auf das Copolymer, und der Ethylengehalt im Reaktorblend 0,7 bis 10 Gew.-%, bezogen auf die Gesamtpolymermasse, ist, bei dem in einer ersten Reaktionsstufe Propylen in Suspension bei einer Temperatur von 30 bis 150 °C, einem Druck von 10 bis 100 bar und einer Verweilzeit von 30 min bis 6 h in Gegenwart eines Katalysators, einer aluminiumorganischen Verbindung und einer Organosiliciumverbindung polymerisiert wird und in einer zweiten Reaktionsstufe Propylen mit Ethylen und ggf. einem weiteren 1-Olefin mit 4 bis 20 Kohlenstoffatomen in der Gasphase bei einer Temperatur von 30 bis 150 °C, einem Druck von 1 bis 50 bar und einer Verweilzeit von 30 min bis 6 h in Gegenwart eines Katalysators, einer aluminiumorganischen Verbindung und einer Organosiliciumverbindung copolymerisiert wird, **dadurch gekennzeichnet, daß** in der ersten Reaktionsstufe das Propylen sowohl Monomer als auch Suspensionsmittel ist, daß das in der ersten Reaktionsstufe hergestellte PP-Homopolymer eine Viskosität von 70 bis 300 ml/g und einen Anteil am Gesamtpolymeren von 75 bis 98 Gew.-% hat, daß nach der zweiten Reaktionsstufe das Gesamtpolymer eine Viskosität von 100 bis 400 ml/g und einen Ethylengehalt von 0,7 bis 10 Gew.-% aufweist und daß in der zweiten Reaktionsstufe ein Copolymer-Produkt mit einem Copolymeranteil von 2 bis 25 Gew.-% am Gesamtpolymer und einem Ethyleneinbau in der zweiten Reaktionsstufe von 13 bis 40 Gew.-% hergestellt wird.

2. Verfahren gemäß Anspruch 1, **dadurch gekennzeichnet, daß** der Ethyleneinbau im Ethylen/Propylen-Copolymer 14 bis 35 Gew.-%, bezogen auf das Copolymer, ist.

3. Verfahren gemäß einem oder mehreren der Ansprüche 1 bis 2, **dadurch gekennzeichnet, daß** der Schmelzflußindex MFR (230/5) 5 bis 400 dg/min, bevorzugt 5 bis 250 dg/min, beträgt.

4. Verfahren gemäß einem oder mehreren der Ansprüche 1 bis 3, **dadurch gekennzeichnet, daß** als Nukleierungsmittel Natrium-Benzoat in einer Konzentration von 0,02 bis 0,5 Gew.-%, vorzugsweise von 0,03 bis 0,4 Gew.-%, bezogen auf die Gesamtpolymermasse, verwendet wird.

## Claims

1. A process for preparing a propylene/ethylene reactor blend which is made up of propylene and ethylene building blocks whose polymer constituents consist of a propylene homopolymer and a low-ethylene ethylene-propylene copolymer and which has a melt flow rate MFR (230/5) of at least 5 dg/min and is nucleated by means of nucleating agents, where the copolymerized ethylene content of the ethylene-propylene copolymer is from 13 to 40% by weight, based on the copolymer, and the ethylene content of the reactor blend is from 0.7 to 10% by weight, based on the total polymer composition, in which, in a first reaction step, propylene is polymerized in suspension at from 30 to 150°C, a pressure of from 10 to 100 bar and a residence time of from 30 minutes to 6 hours in the presence of a catalyst, an organoaluminum compound and an organosilicon compound and, in a second reaction step, propylene is copolymerized with ethylene and optionally a further 1-olefin having from 4 to 20 carbon atoms in the gas phase at from 30 to 150°C, a pressure of from 1 to 50 bar and a residence time of from 30 minutes to 6 hours in the presence of a catalyst, an organoaluminum compound and an organosilicon compound, wherein the propylene serves both as monomer and as suspension medium in the first reaction step, the PP homopolymer prepared in the first reaction step has a viscosity of from 70 to 300 ml/g and makes up from 75 to 98% by weight of the total polymer, the total polymer after the second reaction step has a viscosity of from 100 to 400 ml/g and an ethylene content of from 0.7 to 10% by weight, and the copolymer product prepared in the second reaction step has a copolymer content of from 2 to 25% by weight of the total polymer and a copolymerized ethylene content of the copolymer formed in the second reaction step of from 13 to 40% by weight.

2. A process as claimed in claim 1, wherein the copolymerized ethylene content of the ethylene-propylene copolymer is from 14 to 35% by weight, based on the copolymer.

3. A process as claimed in claim 1 or 2, wherein the melt flow rate MFR (230/5) is from 5 to 400 dg/min, preferably from 5 to 250 dg/min.

4. A process as claimed in any of claims 1 to 3, wherein the nucleating agent used is sodium benzoate in a concentration of from 0.02 to 0.5% by weight, preferably from 0.03 to 0.4% by weight, based on the total polymer composition.

## Revendications

1. Procédé de production d'un mélange réactionnel propylène/éthylène à partir d'éléments structurels propylène et éthylène, dont les composants polymères sont formés d'un homopolymère de propylène et d'un copolymère éthylène/propylène pauvre en éthylène, qui présente un indice de fusion MFR (230/5) d'au moins 5 dg/min et qui est nucléé à l'aide d'agents de nucléation, l'incorporation d'éthylène dans le copolymère éthylène/propylène étant de 13% à 40% en poids par rapport au copolymère, et la teneur en éthylène dans le mélange réactionnel étant de 0,7% à 10% en poids par rapport à la masse totale de polymère, dans lequel, dans une première étape de réaction, on polymérise du propylène en suspension à une température de 30°C à 150°C, sous une pression de 10 bars à 100 bars et pendant un temps de séjour de 30 min à 6 h, en présence d'un catalyseur, d'un composé organo-aluminique et d'un composé organo-silicique et, dans une deuxième étape de réaction, on copolymérise le propylène avec de l'éthylène et éventuellement une autre 1-oléfine ayant 4 à 20 atomes de carbone en phase gazeuse, à une température de 30°C à 150°C, sous une pression de 1 bar à 50 bars et pendant un temps de séjour de 30 min à 6 h, en présence d'un catalyseur, d'un composé organo-aluminique et d'un composé organo-silicique, **caractérisé en ce que**, dans la première étape de réaction, aussi bien le propylène sert aussi bien de monomère que d'agent de suspension, **en ce que** l'homopolymère de PP produit dans la première étape de réaction présente une viscosité de 70 à 300 mL/g et représente une proportion de 75% à 98% en poids du polymère fini, **en ce qu'**à l'issue de la deuxième étape de réaction, le polymère fini présente une viscosité de 100 à 400 mL/g et une teneur en éthylène de 0,7% à 10% en poids et **en ce que** l'on produit, dans la deuxième étape de réaction, un produit copolymère représentant une proportion de copolymère de 2% à 25% en poids du polymère fini et avec une incorporation d'éthylène dans la deuxième étape de réaction de 13% à 40% en poids.

2. Procédé selon la revendication 1, **caractérisé en ce que** l'incorporation d'éthylène dans le copolymère éthylène/propylène va de 14% à 35% en poids par rapport au copolymère.

3. Procédé selon l'une ou plusieurs des revendications 1 à 2, **caractérisé en ce que** l'indice de fusion MFR (230/5) va de 5 à 400 dg/min, de préférence de 5 à 250 dg/min.

4. Procédé selon l'une ou plusieurs des revendications 1 à 3, **caractérisé en ce que** l'on utilise, en tant qu'agent de nucléation, le benzoate de sodium dans une concentration de 0,02% à 0,5% en poids, de préférence de 0,03% à 0,4% en poids par rapport à la masse totale de polymère.
